# EUROPEAN PATENT SPECIFICATION

(11) **EP 3 821 695 B1**
(45) Date of publication and mention of the grant of the patent: **06.11.2024**
(21) Application number: 20178751.2
(22) Date of filing: 08.06.2020
(51) Int. Cl.: A01D 43/063

(54) **WORK VEHICLE**
NUTZFAHRZEUG
VÉHICULE DE TRAVAIL

(30) Priority: 12.11.2019 JP 2019204873
(43) Date of publication of application: 19.05.2021
(73) Proprietor: Kubota Corporation, Osaka-shi, Osaka 556-8601 (JP)
(72) Inventor: KUMASHIRO, Takashi, SAKAI-SHI, OSAKA, 590-0823 (JP); AKAI, Yuto, SAKAI-SHI, OSAKA, 590-0823 (JP); KAGO, Tatsuki, SAKAI-SHI, OSAKA, 590-0823 (JP)
(74) Representative: Cabinet Beau de Loménie

(56) References cited:
- EP-A1- 3 097 758
- FR-A1- 2 625 643
- JP-A- 2013 013 373
- US-A1- 2016 316 636
- US-B1- 6 595 737

## Description

### TECHNICAL FIELD

The present invention relates to a work vehicle having an implement attached to a machine (vehicle) body.

### BACKGROUND ART

As a riding grass mowing machine as an example of a work vehicle, as disclosed in Patent Document 1, there is known one in which a grass collecting section (corresponding to an "implement") is supported to a rear portion of the machine body. In this, cut grass pieces cut by a mower mounted to the machine body are sent to the grass collecting section to be stored therein. And, at the time of e.g. a maintenance operation, the grass collecting section can be detached from the machine body.

### BACKGROUND ART DOCUMENT

### PATENT DOCUMENT

Patent Document 1: Japanese Unexamined Patent Application Publication 2010-148403
US 2016/316636 discloses a lawn sweeper coupled to a tractor.

### SUMMARY OF THE INVENTION

### PROBLEM TO BE SOLVED BY INVENTION

With such riding grass mowing machine, an electrical unit such as a fullness sensor for detecting fullness of the grass collecting section being full of grass (cut grass pieces) therein may sometimes be provided in this grass collecting section. And, a harness extended from the electrical unit is extended to the machine body to be connected to e.g. a control device provided in this machine body.

In this case, if the grass collecting section is configured to be detachable from the machine body as described above, the harness extending between the grass collecting section and the machine body needs to be provided with a harness separation arrangement using a coupler. So, consideration should be made on the water resistance and dust resistance properties of the coupler when separated.

For such work vehicle having an implement configured to be attachable to and detachable from a machine body, the object of the present invention is to appropriately configure the harness separation arrangement using a coupler in case the harness is provided between the implement and the machine body.

### SOLUTION

A work vehicle according to the present invention comprises:
an implement attachable to and detachable from a machine body;
an implement side harness extended from an electrical unit provided in the implement;
an implement side coupler connected to an end portion of the implement side harness;
a machine body side harness extended from the machine body;
an machine body side coupler connected to an end portion of the machine body side harness;
a coupler holding portion provided in the implement or the machine body, the coupler holding portion being configured to hold and cover either the implement side coupler or the machine body side coupler in association with insertion thereto of the implement side coupler or the machine body side coupler; and
a cap attached to the implement side coupler or the machine body side coupler, or attached to the coupler holding portion;
wherein under a working state, the implement side coupler and the machine body side coupler are connected to each other and the cap is attached to the coupler holding portion; and
wherein under a non-working state, the implement side coupler is attached to the coupler holding portion of the implement and the cap is attached to the machine body side coupler, or the machine body side coupler is attached to the coupler holding portion of the machine body and the cap is attached to the implement side coupler.

With the present invention described above, under a condition of the implement being attached to the machine body, a worker will keep the implement side coupler and the machine body side coupler connected to each other.

By attaching the cap which is used when the implement is detached from the machine body to the coupler holding portion, the worker will have not much trouble in storage of the cap and accidental loss of the cap will hardly occur. And, thanks to the cap, adhesion of water, dust or the like to the coupler holding portion can be prevented.

When the implement is to be detached from the machine body, if e.g. the coupler holding portion is provided in the implement, the worker can simply separate the implement side coupler from the machine body side coupler and detach the cap from the coupler holding portion of the implement and then attach it to the machine body side coupler and attach the implement coupler to the coupler holding portion of the implement.

On the other hand, when the implement is to be detached from the machine body, if e.g. the coupler holding portion is provided in the machine body, the worker can separate the implement side coupler from the machine body side coupler and detach the cap from the coupler holding portion of the machine body and then attach it to the implement side coupler and attach the machine body side coupler to the coupler holding portion of the machine body.

With execution of the above-described operations, the implement can be smoothly and easily detached from the machine body.

And, as the cap is attached to the machine body side (implement side) coupler, adhesion of water, dust or the like to the machine body side (implement side) coupler can be prevented.

As the implement side (machine body side) coupler is attached to the coupler holding portion, adhesion of water, dust or the like to the implement side (machine body side) coupler can be prevented.

When the implement is attached to the machine body, the cap is attached to the coupler holing portion, thus preventing adhesion of water, dust or the like to the coupler holding portion. Therefore, it is possible to avoid attachment of the implement side (machine body side) coupler to the coupler holding portion to which water, dust or the like has adhered.

In contrast to the present invention described above, it is conceivable to arrange such that when the implement side coupler and the machine body side coupler were separated from each other, a cap is attached to the implement side coupler and another cap is attached to the machine body side coupler. With this arrangement, at least two caps are needed for the one set of implement side harness and the machine body side harness.

On the other hand, in the case of the present invention, as described above, a coupler holding portion capable of holding the implement side coupler or the machine body side coupler is provided in ether the implement or the machine body. Thus, the number of the couplers is reduced and accidental loss of the cap(s) can be prevented.

And, since the coupler holding portion has two functions, namely, a function of holding the implement side coupler or the machine body side coupler and another function of holding the cap. Thus, the inventive arrangement is advantageous for simplification of the arrangement.

In the present invention, preferably, the coupler holding portion is provided in the implement and the non-working state can be set in which the implement side coupler is attached to the coupler holding portion of the implement and the cap is attached to the machine body side coupler.

With the invention described above, the coupler holding portion is provided in the implement. When the implement is to be detached from the machine body, the worker will separate the implement side coupler from the machine body side coupler and detach the cap from the coupler holding portion and then attach it to the machine body side coupler and attach the implement side coupler to the coupler holding portion.

With the present invention, in the implement which has been detached from the machine body, the implement side coupler is held by the coupler holding portion of the implement. Thus, the implement side harness can be supported to the implement in a stable manner.

In case various kinds of implements are supposed to be attached to the machine body, according to the present invention, in comparison with an arrangement of the coupler holding portion being provided in the machine body, the coupler holding portion can be readily adapted for use with the implement, for such various kinds of implements respectively.

In the present invention, preferably, the machine body side coupler is provided in a support member provided in the machine body.

With the present invention described above, when the implement side coupler and the machine body side coupler have been separated from each other, since the machine body side coupler is attached to a support member provided in the machine body, the machine body side coupler can be supported to the machine body in a stable manner.

In the present invention, preferably, when the implement is attached to the machine body, a connecting direction to the machine body side coupler by the implement side coupler is set different from an inserting direction to the coupler holding portion by the implement side coupler.

In case the implement which was detached previously from the machine body has now been attached to the machine body, the worker will detach the implement side coupler from the coupler holding portion and then connect it to the machine body side coupler.

In this case, under the condition of the implement being attached to the machine body, if the connecting direction to the machine body side coupler by the implement side coupler were set same as the inserting direction to the coupler holding portion by the implement side coupler, the worker might erroneously attach the implement side coupler to the coupler holding portion of the implement again, after once detaching this implement side coupler from the coupler holding portion of the implement.

With the present invention described above, when the implement is attached to the machine body, the connecting direction to the machine body side coupler by the implement side coupler is set different from the inserting direction to the coupler holding portion by the implement side coupler.

With the above, even if the worker may attempt an erroneous operation of reattaching the implement side coupler to the coupler holding portion of the implement after having detached the former from the latter, thanks to the difference set between the connecting direction and the inserting direction described above, the worker will readily take notice of the contemplated operation being erroneous. As a result, the erroneous operation of reattaching the implement side coupler to the coupler holding portion of the implement after having once detached the former from the latter can be lessened.

### BRIEF DESCRIPTION OF THE DRAWINGS

Fig. 1 is a right side view showing a riding grass mowing machine under a condition of a grass collecting section and a control valve unit being attached to a machine body,
Fig.2 is a right side view showing a condition of the grass collecting section and the control valve unit being detached from the machine body,
Fig. 3 is a front view showing vicinity of the control valve unit and a cover under a condition of the control valve unit being attached to the machine body,
Fig. 4 is a front view showing vicinity of the control valve unit under the condition of the control valve unit being attached to the machine body,
Fig.5 is a perspective view showing the vicinity of the control valve unit under the condition of the control valve unit being attached to the machine body,
Fig. 6 is a perspective view showing the cover and a coupler holding portion,
Fig. 7 is a perspective view showing the cover and the coupler holding portion,
Fig. 8 is a perspective view showing a coupler of a machine body side harness,
Fig. 9 is a perspective view showing a coupler of an implement side harness, and
Fig. 10 is a perspective view of a cap.

### EMBODIMENT

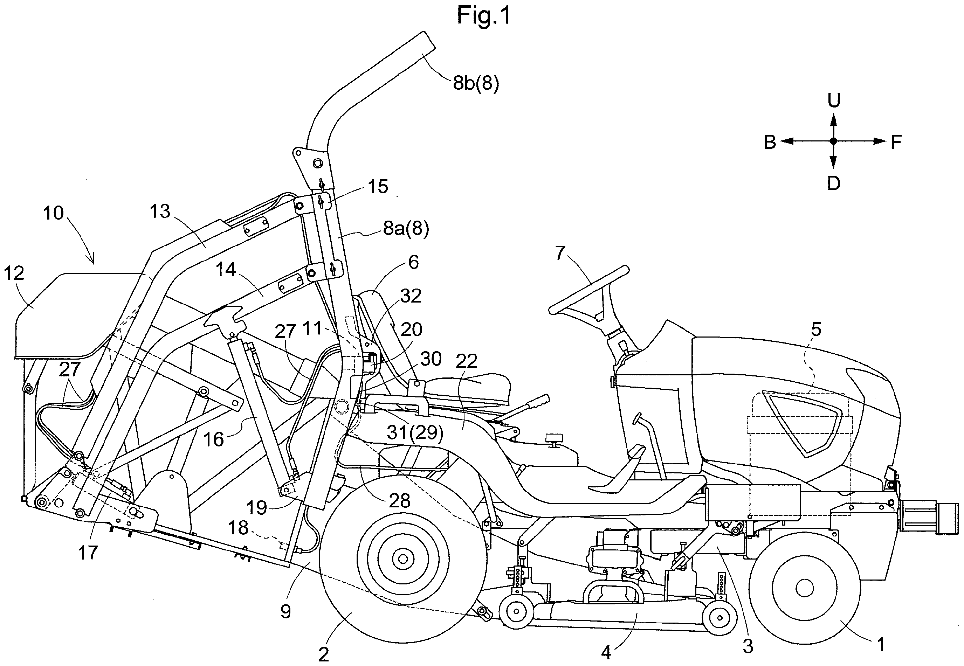

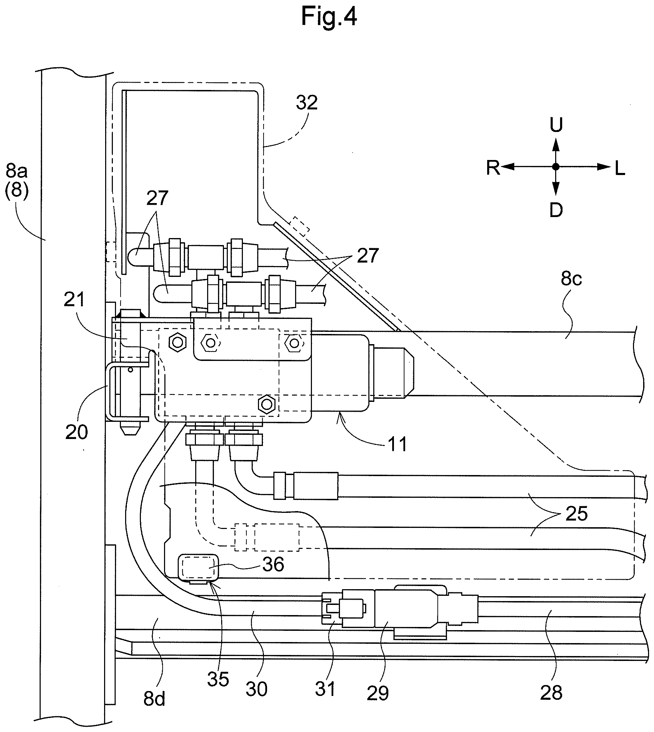

Figs. 1 through 10 show a mid-mount riding type grass mowing machine as one example of a "work vehicle". In Figs. 1 through 10, a sign "F" denotes the front direction, a sign "B" denotes a rear (back) direction, a sign "U" denotes the upper direction, a sign "D" denotes the downward direction, a sign "R" denotes the right direction and a sign "L" denotes the left direction, respectively.

### (General Configuration of Riding Grass Mowing Machine)

As shown in Fig. 1, right and left front wheels 1 and right and left rear wheels 2 together support a machine body frame 3 (corresponding to a "machine body"), and a mower 4 is disposed between the front wheels 1 and the rear wheels 2 and supported to the machine body frame 3.

An engine 5 is supported to a front portion of the machine body frame 3 and a driver's seat 6 is supported to a rear portion of the machine body frame 3. At a position forwardly of the driver's seat 6, there is supported a steering wheel 7 for steering the front wheels 1.

As shown in Figs. 1 through 4, a ROPS frame 8 (corresponding also to the "machine body") is coupled to the machine body frame 3 to be disposed rearwardly of the driver's seat 6 as seen in a side view. The ROPS frame 8 includes right and left struts 8a coupled to rear portions of the machine body frame 3 and extending upwards, an arch portion 8b connected to and between upper portions of the right and left struts 8a, and a side frame 8c and a side frame 8d (both corresponding to a "support member") coupled to and between vertically intermediate portions of the right and left struts 8a of the ROPS frame 8.

From a left/right center portion of the mower 4, a duct 9 is extended obliquely upwards on the rear side, and the duct 9 is disposed between the right and left rear wheels 2 and between the right and left struts 8a of the ROPS frame 8 and is disposed also downwardly of the driver's seat 6.

A grass collecting section 10 (corresponding to an "implement") is provided to be attachable to and detachable from the right and left struts 8a of the ROPS frame 8. A control valve unit 11 (corresponding also to the "implement") for feeding/discharging work oil to/from a grass collecting section 10 is provided to be attachable to and detachable from the side frame 8c of the ROPS frame 8.

### (Arrangement of Grass Collecting Section)

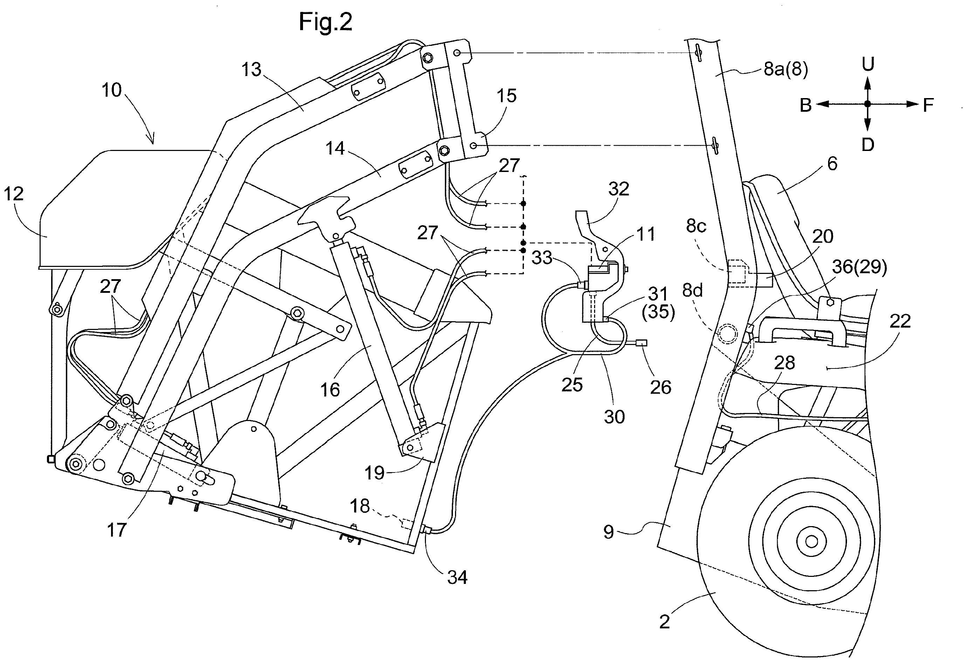

As shown in Figs. 1 and 2, the grass collecting section 10 includes a grass collecting container 12, right and left upper links 13, right and left lower links 14, right and left support brackets 15, right and left hydraulic cylinders 16, 17, a fullness sensor 18 (corresponding to an "electrical unit"), etc.

The grass collecting container 12 is configured as a box-like member, with attachment of a wall face constituted of such a member as an air-permeable mesh or the like having air permeability to a box-like frame. The fullness sensor 18 is provided at a front lower portion inside the grass collecting container 12 and configured to detect a movement of a movable contact plate (not shown).

Leading ends of the upper links 13 and the lower links 14 are placed in contact with a right rear portion and a left rear portion of the grass collecting container 12. Between and to base portions of the right upper link 13 and the right lower link 14, the right support bracket 15 is connected, and between and to base portions of the left upper link 13 and the left lower link 14, the left support bracket 15 is connected.

The right and left hydraulic cylinders 16 are connected to and between the right and left lower links 14 and the right and left support brackets 19 of the grass collecting section 10. The right and left hydraulic cylinders 17 are provided at the connecting portions between the upper links 14, the lower links 14 and the grass collecting container 12.

### (Attaching Operation of Grass Collecting Section to Riding Grass Mowing Machine and Grass Cutting Work)

The condition shown in Fig. 2 is a condition in which the grass collecting section 10 is detached from the riding grass mowing machine. As shown from Fig. 2 to Fig. 1, as the right and left support brackets 15 are coupled to the right and left struts 8a of the ROPS frame 8, the grass collecting section 10 is attached to the ROPS frame 8 (riding grass mowing machine).

Under the condition of the grass collecting section 10 being attached to the ROPS frame 8, the rear portion of the duct 9 will be inserted to a front portion of the grass collecting container 12. When a grass cutting (mowing) work is carried out, grass pieces cut by the mower 4 will be conveyed through the duct 9 to be charged into the grass collecting container. 12.

When the cut grass pieces cut by the mower 4 are to be charged into the grass collecting container 12, these grass pieces will firstly be deposited at a rear lower portion of the inside of the grass collecting container 12. In association with progressive charging of the grass pieces, the position of the cut grass pieces inside the grass collecting container 12 will move to the forward side. And, when the grass pieces inside the grass collecting container 12 reach a position in contact with the fullness sensor 18, it is determined that the grass collecting container 12 has reached fullness.

When the hydraulic cylinders 16 are expanded from the state thereof shown in Fig.1, the upper and lower links 13, 14 will be elevated, whereby the grass collecting container 12, while kept under the posture thereof shown in Fig. 1, will be elevated.

Then, under this elevated state of the grass collecting container 12, if the hydraulic cylinders 17 are expanded, the grass collecting container 12 will be pivoted clockwise in Fig. 1, about the connecting portions with the upper and lower links 13, 14, acting as a "pivot", so that the front portion of the grass collecting container 12 will be oriented downwards, thus allowing discharge (dumping) of the cut grass pieces of the grass collecting container 12 onto the ground surface.

### (Arrangement of Control Valve Unit)

The control valve unit 11 is provided with a plurality of electromagnetic control valves (corresponding to the "electrical unit") (not shown) for carrying out feeding/discharging operations of the work oil to/from the hydraulic cylinders 16, 17.

As shown in Figs. 2 through 5, the side frames 8c, 8d of the ROPS frame 8 are located on the lateral sides of the driver's seat 6 as seen in the side view and a support bracket 20 is coupled and bound between the right strut 8a and the right end portion of the side frame 8c of the ROPS frame 8.

The control valve unit 11 is attached to the support bracket 20 via an attaching pin 21 and is attached to the ROPS frame 8 via the support bracket 20. By detachment of the attaching pin 21 from the support bracket 20, the control valve unit 11 is detached from the ROPS frame 8.

As shown in Fig. 1 and Fig. 2, under the condition of the control valve unit 11 is attached to the ROPS frame 8, the control unit 11 is disposed at substantially same height as the seat portion of the driver's seat 6 as seen in the side view and disposed also rearwardly of the seat portion of the driver's seat 6 and is disposed on the right side of the driver's seat 6 as seen in a front view (rear view) and is also disposed upwardly of a fender 22 covering the upper side of the right rear wheel 2.

A cover 32 made of synthetic resin is provided and this cover 32 is attached to a front portion of the control valve unit 11 in such a manner as to cover the front face portion of the control valve unit 11.

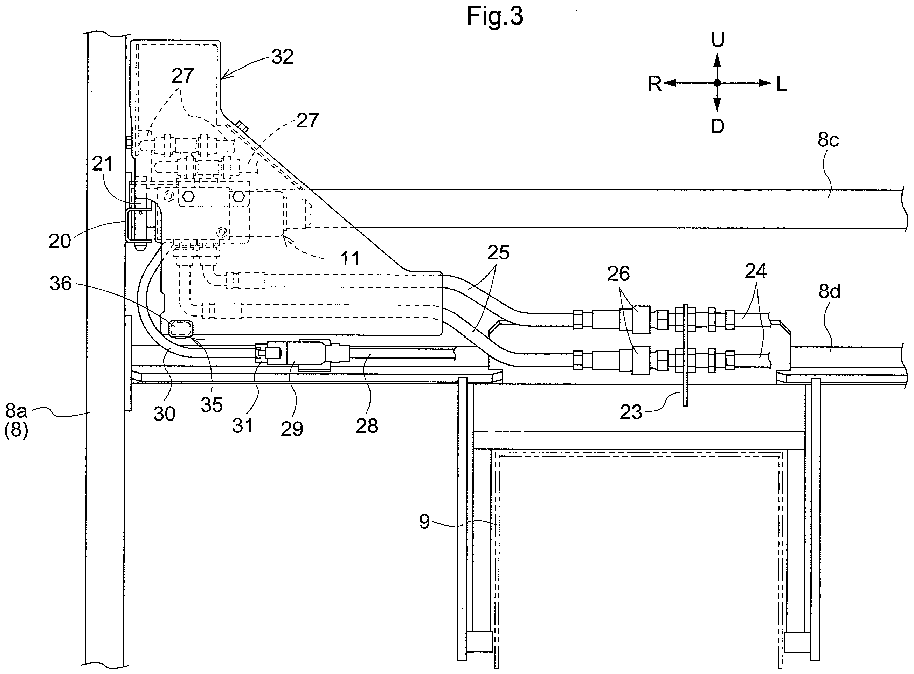

As shown in Fig. 3, a support bracket 23 is coupled to an upper face portion of the duct 9 and feeding and discharging hydraulic hoses 24 are connected to the support bracket 23, and work oil of a hydraulic pump (not shown) driven by power of the engine 5 is fed to the feeding hydraulic hose 24.

As shown in Figs. 2 through 5, feeding and discharging hydraulic hoses 25 are extended from the control valve unit 11 and these hydraulic hoses 25 are connected to the respective hydraulic hoses 24 via work oil couplers 26. Further, a plurality of hydraulic hoses 27 are extended from the control valve unit 11 and these hydraulic hoses 27 are connected to the hydraulic cylinders 16, 17.

With the above-described arrangements, in operation, the work oil of the hydraulic pump is fed/discharged via the control valve unit 11 to/from the hydraulic cylinders 16, 17 to expand/contract the hydraulic cylinders 16, 17.

### (Arrangements of Machine Body Side Harness and Coupler)

As shown in Figs. 3, 4 and 5, a water-proof type machine body side harness 28 is extended to the side frame 8d of the ROPS frame 8 and a water-proof type coupler 29 is connected to an end portion of a machine body side harness 28. The coupler 29 of the machine side harness 28 is attached to the side frame 8d of the ROPS frame 8 to be disposed downwardly of the control valve unit 11 as seen in the front view.

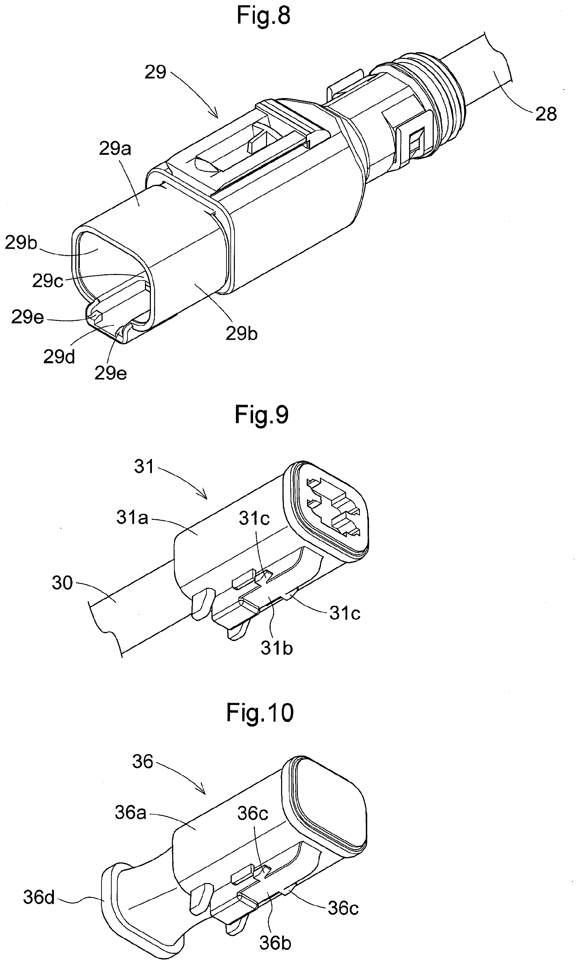

As shown in Fig. 8, in the coupler 29 of the machine body side harness 28, an upper portion 29a, two side (lateral) portions 29b and a lower portion 29c are formed in continuation thus forming a cylindrical body. And, this coupler 29 of the machine body side harness 28 is formed of synthetic resin.

At the lower portion 29c of the coupler 29 of the machine body side harness 28, there is formed a recess portion 29d having a channel-like cross section and bulging downwards. And, at opposed ends of the entrance of this recess portion 29d, a pair of protruding portions 29e are formed.

### (Arrangements of Implement Side Harness and Coupler)

As shown in Figs. 3, 4 and 5, a water-proof type implement side harness 30 is extended from the control valve unit 11 and a water-proof type coupler 31 is connected to the end portion of the implement side coupler 30.

As shown in Fig. 9, in the coupler 31 of the implement side harness 30, there are formed a body portion 31a having a same outer shape as the inner faces of the upper portion 29a, the side portions 29b and the lower portion 29c of the coupler 29 (see Fig. 8) of the machine body side harness 28, a longitudinally elongate protruding portion 31b provided at the lower face portion of the body portion 31a and protruding portions 31c provided at opposed side (lateral) portions of the protruding portion 31b, and the coupler 31 of the implement side harness 30 is formed of synthetic resin.

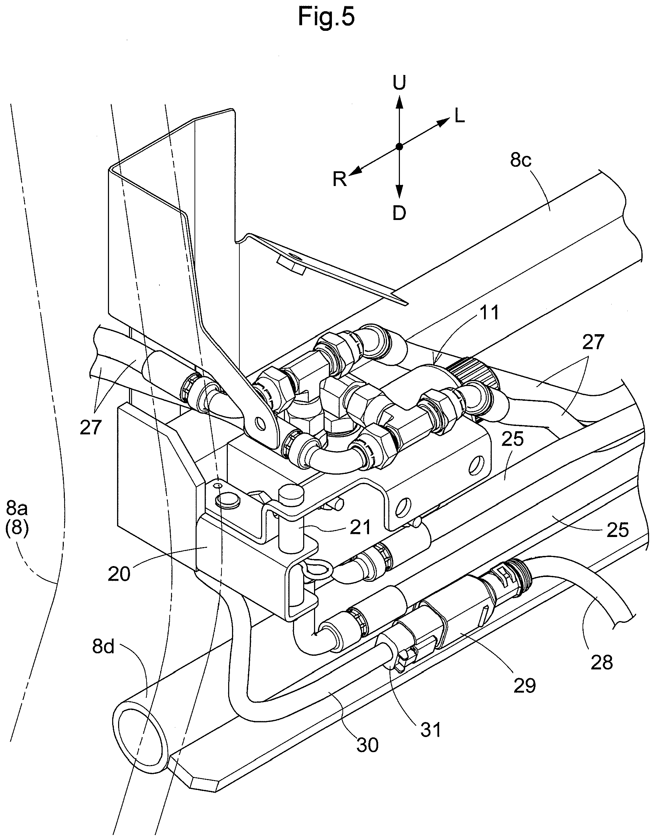

As shown in Figs. 5, 8 and 9, the implement side coupler 31 of the implement side harness 30 will be inserted into the coupler 29 of the machine body side harness 28 in such a manner that the protruding portions 31b, 31c of the coupler 31 of the implement side harness 30 are fitted into the recess portion 29d of the coupler 29 of the machine body side harness 28. With this, connection is established between the coupler 31 of the implement side harness 30 and the coupler 29 of the machine body side harness 28.

In the course of the above process, the protruding portion 31c of the coupler 31 of the implement side harness 30 and the protruding portion 29e of the coupler 29 of the machine body side harness 28 are elastically deformed and the protruding portion 31c of the coupler 31 of the implement side harness 30 rides over the protruding portion 29e of the coupler 29 of the machine body side harness 28 and engagement is established between the protruding portion 31c of the coupler 31 of the implement side harness 30 and the protruding portion 29e of the coupler 29 of the machine body side harness 28. With this, the connection between the coupler 31 of the implement side harness 30 and the coupler 29 of the machine body side harness 28 is maintained.

As shown in Fig. 2, the implement side harness 30 is bifurcated into two branches, and a water-proof type coupler 33 is connected to an end portion of one branch of the implement side harness 30 and this coupler 33 is connected to the control valve unit 11. And, a water-proof type coupler 34 is connected to an end portion of the other branch of the implement side harness 30 and this coupler 34 is connected to the fullness sensor 18.

With the above-described arrangements in operation, when a worker operates an operational tool (not shown) provided in the riding grass mowing machine, an operational signal of the operational tool is inputted to a control device (not shown), and an operational signal from this control device is outputted to the machine body side harness 28. And, the operational signal of the control device is transmitted from the machine body side harness 28 via the implement side harness 30 to the control valve unit 11, whereby the control valves of the control valve unit 11 are operated to expand/contract the hydraulic cylinders 16, 17.

When the grass collecting container 12 becomes full of cut grass pieces, a detection signal is outputted from the fullness sensor 18 and this detection signal of the fullness sensor 18 is inputted from the implement side harness 30 via the machine body side harness 28 to the control device. Then, based on this input of the detection signal of the fullness sensor 18, the control device activates an alarm lamp (not shown) or an alarm buzzer (not shown) to alert the worker.

### (Arrangement of Coupler Holding Portion)

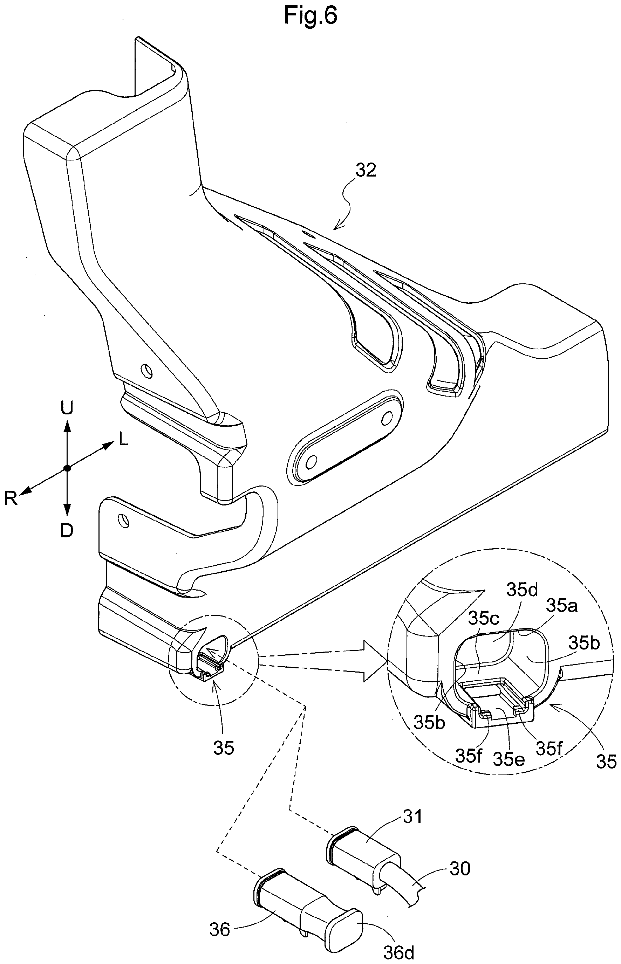

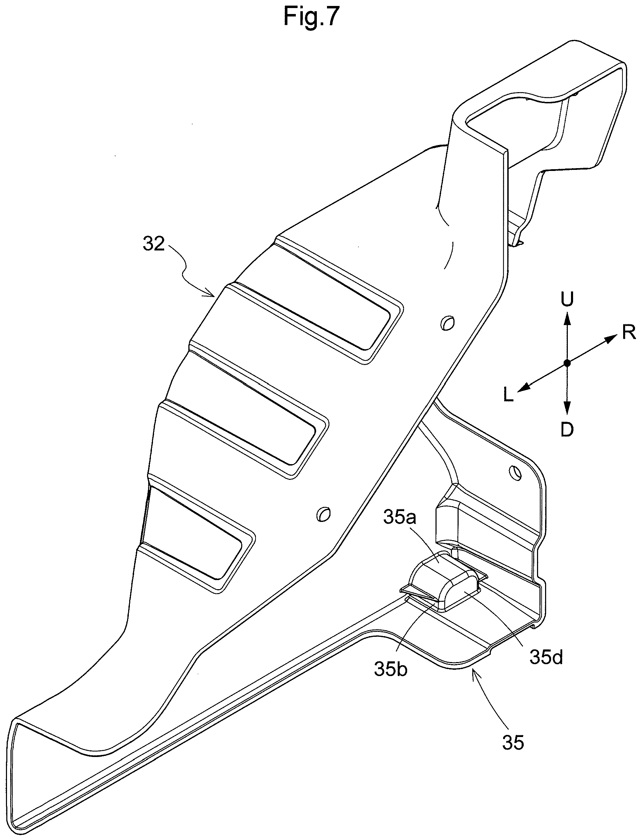

As shown in Fig. 6 and Fig. 7, in the cover 32 attached to the front portion of the control valve unit 11, at a right end portion of the lower portion of the front face portion, a coupler holding portion 35 is formed integral with the cover 32.

In the coupler holding portion 35, an upper portion 35a, two side (lateral) portions 35b and a lower portion 35c are formed in continuation to form a cylindrical body and a wall portion 35d is formed integrally at the inner depth portion of the upper portion 35a, the side portions 35b and the lower portion 35c.

At the lower portion 35c of the coupler holding portion 35, there is formed a recess portion 35e having a channel-like cross section and bulging downwards. And, at opposed ends of the entrance of this recess portion 35e, a pair of protruding portions 35f are formed. With these, coupler holding portion 35 is provided with the same shape as that of the coupler 29 of the machine body side harness 28 (see Fig. 8).

### (Arrangement of Cap)

As shown in Fig. 6 and Fig. 10, a cap 36 is provided to be attachable to and detachable from the coupler holding portion 35.

In this cap 36, there are formed a body portion 36a having the same outer shape as the inner faces of the upper portion 29a, the side portions 29b and the lower portion 29c of the coupler 29 (see Fig. 8) of the machine body side harness 28, a longitudinally elongate protruding portion 36b provided at the lower face portion of the body portion 36a, protruding portions 36c provided at the opposed side portions of the protruding portion 36b, and a grip portion 36d provided at a rear portion of the body portion 36a, and this cap 36 is formed of synthetic resin.

The cap 36 is configured with the same shape as the coupler 31 (see Fig. 9) of the implement side harness 30, and the cap 36 differs from the coupler 31 of the implement side harness 30 in that the cap 36 has no connecting terminal and the cap 36 has the grip portion 36d.

### (Working State)

As described above in the foregoing sections under the headings: (Attaching Operation of Grass Collecting Section to Riding Grass Mowing Machine and Grass Cutting Work) and (Arrangement of Control Valve Unit), under the condition of the grass collecting section 10 and the control valve unit 11 being attached to the riding grass mowing machine, there will arise a situation to be explained next.

As shown in Fig. 1 and Figs. 3 through 6, the worker will connect the coupler 31 of the implement side harness 30 with the coupler 29 of the machine body side harness 28 (see the forgoing section: (Arrangements of Implement Side Harness and Coupler)) and will attach the cap 36 to the coupler holding portion 35 while holding the grip portion 36d of the cap 36.

When the cap 36 is to be attached to the coupler holding portion 35, as shown in Fig. 6 and Fig. 10, the cap 36 will be inserted into the coupler holding portion 35 in such a manner that the protruding portions 36b, 36c of the cap 36 are fitted into the recess portion 35e of the coupler holding portion 35.

In the course of the above, while the protruding portion 36c of the cap 36 and the protruding portion 35f of the coupler holding portion 35 will be elastically deformed and the protruding portion 36c of the cap 36 will ride over the protruding portion 35f of the coupler holding portion 35, thereby to establish connection between the protruding portion 36c of the cap 36 and the protruding portion 35f of the coupler holding portion 35. With this, the cap 36 is held and retained to the coupler holding portion 35.

The above-described situation is the working state.

In this working state, as the cap 36 is inserted to and held by the coupler holding portion 35, the cap 36 is stored in the coupler holding portion 35, so that intrusion or adhesion of water, dust, or the like to the interior of the coupler holding portion 35 is prevented by the cap 36.

### (Non-Working State)

As described above in the foregoing sections under headings of: (Attaching Operation of Grass Collecting Section to Riding Grass Mowing Machine and Grass Cutting Work) and (Arrangement of Control Valve Unit), under the condition of the grass collecting section 10 and the control valve unit 11 being detached from the riding grass mowing machine, there will arise a situation to be explained next.

As shown in Fig. 2 and Fig. 6, the worker will detach the coupler 31 of the implement side harness 30 from the coupler 29 of the machine body side harness 28 (see the foregoing section: (Arrangements of Implement Side Harness and Coupler).

The worker, while holding the grip portion 36d of the cap 36, will detach the cap 36 from the coupler holding portion 35 and then attach this cap 36 to the coupler 29 of the machine body side harness 28.

Like the above case of the cap 36 being attached to the coupler holding portion 35, as shown in Fig.8 and Fig. 10, the cap 36 is inserted into the coupler 29 of the machine body side harness 28 in such a manner that the protruding portions 36b, 36c of the cap 36 are fitted into the recess portion 28d of the coupler 29 of the machine body side harness 29, thus establishing connection between the protruding portion 36c of the cap 36 and the protruding portion 29e of the coupler 29 of the machine body side harness 28. With this, the cap 36 is held and retained to the coupler 29 of the machine body side harness 28.

The worker will attach the coupler 31 of the implement side harness 30 to the coupler holding portion 35.

Like the above-described case of the coupler 31 of the implement side harness 30 being attached to the coupler 29 of the machine body side harness 28, as shown in Fig. 6 and Fig. 9, the coupler 31 of the implement side harness 30 will be inserted into the coupler holding portion 35 in such a manner that the protruding portions 31b, 31c of the coupler 31 of the implement side harness 30 are inserted into the recess portion 35e of the coupler holding portion 35, thus establishing connection between the protruding portion 31c of the coupler 31 of the implement side harness 30 and the protruding portion 35f of the coupler holding portion 35. With this, the coupler 31 of the implement side harness 30 is held and retained to the coupler holding portion 35.

The above-described situation is the non-working state.

In this non-working state, as the cap 36 is stored in the coupler 29 of the machine body side harness 28. And, as the cap 36 is attached to the coupler 29 of the machine body side harness 28 in such as manner as to cover the connection terminal of the coupler 29 of the machine body side harness 28, intrusion and adhesion of water, dust or the like to the coupler 29 of the machine body side harness 28 can be prevented.

In the non-working state, as the coupler 31 of the implement side harness 30 is inserted and attached to the coupler holding portion 35, intrusion and adhesion of water, dust or the like to the coupler 31 of the implement side harness 30 can be prevented.

In the working state, as the cap 36 is attached to the coupler holding portion 35, intrusion and adhesion of water, dust or the like to the interior of the coupler holding portion 35 is prevented, so that the undesirable event of attachment of the coupler 31 of the implement side harness 30 to the coupler holding portion 35 to which water, dust or the like has adhered can be avoided advantageously.

As shown in Figs. 3 through 6, under the condition of the grass collecting section 10 and the control valve unit 11 being attached to the riding grass mowing machine, the direction of connection to the coupler 29 of the machine body side harness 28 by the coupler 31 of the implement side harness 30 is the left/right direction, whereas the direction of insertion to the coupler holding portion 35 by the coupler 31 of the implement side harness 30 is the front/rear direction, thus, the connecting direction (left/right direction) and the inserting direction (front/rear direction) being set different from and orthogonal to each other.

### (First Modified Embodiment of Embodying Invention)

The control valve unit 11 may be attached to the grass collecting section 10. With this arrangement, when the grass collecting section 10 is attached to or detached from the riding grass mowing machine, the control valve unit 11 too will be attached to or detached from the riding grass mowing machine.

As the implement side harness 30, there may be employed an implement side harness 30 for a signal from a detection sensor (not shown) for detecting an expanded/contracted state of the hydraulic cylinders 16, 17 of the grass collecting section 10.

### (Second Modified Embodiment of Embodying Invention)

Under the condition of the grass collecting section 10 and the control valve unit 11 being attached to the riding grass mowing machine, the connecting direction to the coupler 29 of the machine body side harness 28 by the coupler 31 of the implement side harness 31 may be set as the front/rear direction and the inserting direction to the coupler holding portion 35 by the coupler 31 of the implement side harness 30 may be set as the left/right direction.

### (Third Modified Embodiment of Embodying Invention)

The coupler holding portion 35 may be provided in the machine body frame 3 or the ROPS frame 8 of the riding grass mowing machine.

With this arrangement, in the working state, connection will be established between the coupler 31 of the implement side harness 30 and the coupler 29 of the machine body side harness 28 and the cap 36 will be attached to the coupler holding portion 35 provided in the machine body frame 3 or the ROPS frame 8 of the riding grass mowing machine.

In the non-working state, the coupler 29 of the machine body side harness 28 will be attached to the coupler holding portion 35 provided in the machine body frame 3 or the ROPS frame 8 of the riding grass mowing machine and the cap 36 will be attached to the coupler 31 of the implement side harness 30.

### INDUSTRIAL APPLICABILITY

The present invention is applicable not only to a riding grass mowing machine, but also to any work vehicle with an implement other than the grass collecting section being configured to be attachable to and detachable from the machine (vehicle) body.

### DESCRIPTION OF SIGNS

- 3:: machine body frame (machine body)
- 8:: ROPS frame (machine body)
- 8d:: side frame (support member)
- 10:: grass collecting section (implement)
- 11:: control valve unit (implement)
- 18:: fullness sensor (electrical unit)
- 28:: machine body side harness
- 29:: coupler
- 30:: implement side harness
- 31:: coupler
- 35:: coupler holding portion
- 36:: cap

## Claims

1. A work vehicle comprising:
an implement (10, 11) attachable to and detachable from a machine body (3, 8);
an implement side harness (30) extended from an electrical unit (18) provided in the implement (10, 11);
an implement side coupler (31) connected to an end portion of the implement side harness (30);
a machine body side harness (28) extended from the machine body (3, 8);
an machine body side coupler (29) connected to an end portion of the machine body side harness (28);
a coupler holding portion (35) provided in the implement or the machine body (3, 8), the coupler holding portion (35) being configured to hold and cover either the implement side coupler (31) or the machine body side coupler (29) in association with insertion thereto of the implement side coupler (31) or the machine body side coupler (29); and
a cap (36) attached to the implement side coupler or the machine body side coupler, or attached to the coupler holding portion;
wherein under a working state, the implement side coupler (31) and the machine body side coupler (29) are connected to each other and the cap (36) is attached to the coupler holding portion (35); and
**characterized in that**
under a non-working state, the implement side coupler (31) is attached to the coupler holding portion (35) of the implement and the cap (36) is attached to the machine body side coupler (29), or the machine body side coupler (29) is attached to the coupler holding portion (35) of the machine body (3, 8) and the cap (36) is attached to the implement side coupler (31).

2. The work vehicle of claim 1, wherein:
under the non-working state, the implement side coupler (31) and the machine body side coupler (29) are separated from each other.

3. The work vehicle of claim 1 or 2, wherein:
the coupler holding portion (35) is provided on the implement; and
the non-working state is set in which the implement side coupler (31) is attached to the coupler holding portion of the implement and the cap (36) is attached to the machine body side coupler (29).

4. The work vehicle of claim 1 to 3, wherein the machine body side coupler (29) is provided in a support member (8d) provided in the machine body.

5. The work vehicle of any of claims 1 to 4, wherein when the implement is attached to the machine body (3, 8), a connecting direction to the machine body side coupler (29) by the implement side coupler (31) is set different from an inserting direction to the coupler holding portion (35) by the implement side coupler.

## Patentansprüche

1. Nutzfahrzeug, umfassend:
ein Arbeitsgerät (10, 11), das an einem Maschinenkörper (3, 8) anbringbar und davon abnehmbar ist;
einen arbeitsgeräteseitigen Kabelbaum (30), der sich von einer elektrischen Einheit (18) erstreckt, die in dem Arbeitsgerät (10, 11) bereitgestellt ist;
eine arbeitsgeräteseitige Kupplung (31), die mit einem Endabschnitt des arbeitsgeräteseitigen Kabelbaums (30) verbunden ist;
einen maschinenkörperseitigen Kabelbaum (28), der sich von dem Maschinenkörper (3, 8) erstreckt;
eine maschinenkörperseitige Kupplung (29), die mit einem Endabschnitt des maschinenkörperseitigen Kabelbaums (28) verbunden ist;
einen Kupplungshalteabschnitt (35), der in dem Arbeitsgerät oder dem Maschinenkörper (3, 8) bereitgestellt ist, wobei der Kupplungshalteabschnitt (35) konfiguriert ist, um entweder die arbeitsgeräteseitige Kupplung (31) oder die maschinenkörperseitige Kupplung (29) in Assoziation mit einem Einsetzen der arbeitsgeräteseitigen Kupplung (31) oder der maschinenkörperseitigen Kupplung (29) darin zu halten und abzudecken; und
eine Kappe (36), die an der arbeitsgeräteseitigen Kupplung oder der maschinenkörperseitigen Kupplung angebracht ist, oder an dem Kupplungshalteabschnitt angebracht ist;
wobei die arbeitsgeräteseitige Kupplung (31) und die maschinenkörperseitige Kupplung (29) in einem Arbeitszustand miteinander verbunden sind und die Kappe (36) an dem Kupplungshalteabschnitt (35) angebracht ist; und
**dadurch gekennzeichnet, dass** in einem Nicht-Arbeitszustand die arbeitsgeräteseitige Kupplung (31) an dem Kupplungshalteabschnitt (35) des Arbeitsgeräts angebracht ist und die Kappe (36) an der maschinenkörperseitigen Kupplung (29) angebracht ist, oder die maschinenkörperseitige Kupplung (29) an dem Kupplungshalteabschnitt (35) des Maschinenkörpers (3, 8) angebracht ist und die Kappe (36) an der arbeitsgeräteseitigen Kupplung (31) angebracht ist.

2. Nutzfahrzeug nach Anspruch 1, wobei:
in dem Nicht-Arbeitszustand die arbeitsgeräteseitige Kupplung (31) und die maschinenseitige Kupplung (29) voneinander getrennt sind.

3. Nutzfahrzeug nach Anspruch 1 oder 2, wobei:
der Kupplungshalteabschnitt (35) an dem Arbeitsgerät bereitgestellt ist; und
der Nicht-Arbeitszustand eingestellt wird, in dem die arbeitsgeräteseitige Kupplung (31) an dem Kupplungshalteabschnitt des Arbeitsgeräts angebracht ist und die Kappe (36) an der maschinenkörperseitigen Kupplung (29) angebracht ist.

4. Nutzfahrzeug nach einem der Ansprüche 1 bis 3, wobei die maschinenkörperseitige Kupplung (29) in einem Trägerelement (8d) bereitgestellt ist, das in dem Maschinenkörper bereitgestellt ist.

5. Nutzfahrzeug nach einem der Ansprüche 1 bis 4, wobei, wenn das Arbeitsgerät an dem Maschinenkörper (3, 8) angebracht ist, eine Verbindungsrichtung zu der maschinenkörperseitigen Kupplung (29) durch die arbeitsgeräteseitige Kupplung (31) anders als eine Einführrichtung zu dem Kupplungshalteabschnitt (35) durch die arbeitsgeräteseitige Kupplung eingestellt ist.

## Revendications

1. Véhicule de travail comprenant :
un outil (10, 11) pouvant être fixé à et détaché d'un corps de machine (3, 8) ;
un câblage côté outil (30) s'étendant à partir d'une unité électrique (18) prévue dans l'outil (10, 11) ;
un coupleur côté outil (31) raccordé à une partie d'extrémité du câblage côté outil (30) ;
un câblage côté corps de machine (28) s'étendant à partir du corps de machine (3, 8) ;
un coupleur côté corps de machine (29) raccordé à une partie d'extrémité du câblage côté corps de machine (28) ;
une partie de maintien de coupleur (35) prévue dans l'outil ou le corps de machine (3, 8), la partie de maintien de coupleur (35) étant configurée pour maintenir et couvrir le coupleur côté outil (31) ou le coupleur côté corps de machine (29) en association avec l'insertion du coupleur côté outil (31) ou du coupleur côté corps de machine (29) ; et
un capuchon (36) fixé sur le coupleur côté outil ou sur le coupleur côté corps de machine, ou fixé sur la partie de maintien de coupleur ;
dans lequel à l'état de travail, le coupleur côté outil (31) et le coupleur côté corps de machine (29) sont raccordés entre eux et le capuchon (36) est fixé à la partie de maintien de coupleur (35) ; et
**caractérisé en ce que** :
dans un état de repos, le coupleur côté outil (31) est fixé à la partie de maintien de coupleur (35) de l'outil et le capuchon (36) est fixé au coupleur côté corps de machine (29), ou le coupleur côté corps de machine (29) est fixé à la partie de maintien de coupleur (35) du corps de machine (3, 8) et le capuchon (36) est fixé au coupleur côté outil (31).

2. Véhicule de travail selon la revendication 1, dans lequel :
à l'état de repos, le coupleur côté outil (31) et le coupleur côté corps de machine (29) sont séparés l'un de l'autre.

3. Véhicule de travail selon la revendication 1 ou 2, dans lequel :
la partie de maintien de coupleur (35) est prévue sur l'outil ; et
l'état de repos est défini comme un étant dans lequel le coupleur côté outil (31) est fixé à la partie de maintien de coupleur de l'outil et le capuchon (36) est fixé au coupleur côté corps de machine (29).

4. Véhicule de travail selon la revendication 1 à 3, dans lequel le coupleur côté corps de machine (29) est prévu dans un élément de support (8d) prévu dans le corps de machine.

5. Véhicule de travail selon l'une quelconque des revendications 1 à 4, dans lequel lorsque l'outil est fixé au corps de machine (3, 8), une direction de raccordement au coupleur côté corps de machine (29) par le coupleur côté outil (31) est déterminée pour être différente d'une direction d'insertion dans la partie de maintien de coupleur (35) par le coupleur côté outil.
